(19) **Europäisches Patentamt**
**European Patent Office**
**Office européen des brevets**

(11) **EP 3 286 468 B1**

(12) **FASCICULE DE BREVET EUROPÉEN**

(45) Date de publication et mention
de la délivrance du brevet:
**19.06.2019 Bulletin 2019/25**

(51) Int Cl.:
*F16K 31/124* (2006.01)   *F16K 31/128* (2006.01)

(21) Numéro de dépôt: **16722299.1**

(22) Date de dépôt: **22.04.2016**

(86) Numéro de dépôt international:
**PCT/FR2016/050959**

(87) Numéro de publication internationale:
**WO 2016/170286 (27.10.2016 Gazette 2016/43)**

(54) **VANNE ET PROCEDE DE COMMANDE**

VENTIL UND STEUERUNGSVERFAHREN

VALVE, AND CONTROL METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.04.2015 FR 1553633**

(43) Date de publication de la demande:
**28.02.2018 Bulletin 2018/09**

(73) Titulaire: **ArianeGroup SAS**
**75015 Paris (FR)**

(72) Inventeurs:
• **COLAS, Stéphane, Fernand, Guy**
**27700 Les Andelys (FR)**

• **LE GONIDEC, Serge, Daniel**
**27200 Vernon (FR)**
• **KLEIN, Manuel**
**27200 Vernon (FR)**
• **NOMERANGE, Philippe**
**78300 Poissy (FR)**

(74) Mandataire: **Cabinet Beau de Loménie**
**158, rue de l'Université**
**75340 Paris Cedex 07 (FR)**

(56) Documents cités:
EP-A1- 0 639 737       US-A1- 2002 117 214
US-A1- 2004 129 906    US-A1- 2010 051 110
US-A1- 2011 048 556

**Description**

Arrière-plan de l'invention

La présente invention concerne une vanne et un procédé de régulation d'un écoulement de gaz d'un conduit amont à un conduit aval, avec un actionneur apte à être alimenté par du fluide provenant du conduit amont, de telle manière qu'un fluide dont l'écoulement est régulé par un organe mobile déplacé par cet actionneur serve en même temps en tant que source d'énergie pour son actionnement.

Le document US2002/0117214 A1 divulgue une vanne de régulation d'un écoulement de gaz d'un conduit amont à un conduit aval, ladite vanne comprenant un passage apte à communiquer le conduit amont au conduit aval ; un organe mobile disposé de manière à faire varier une section d'écoulement dudit passage en se déplaçant ; un actionneur avec une chambre interne en communication avec un conduit d'échappement et un conduit d'admission apte à être relié au conduit amont, ledit actionneur étant disposé de manière à déplacer ledit organe mobile en fonction d'une pression dans ladite chambre interne ; une valve installée sur ledit conduit d'admission et une sur ledit conduit d'échappement ; un capteur de pression amont, relié au conduit amont ; et une unité de commande, connectée au capteur de pression amont, ainsi qu'à chaque valve installée sur ledit conduit d'admission ou ledit conduit d'échappement, incorporant un capteur mesurant la pression régnant dans ladite chambre interne.

Le document US2010/0051110 A1 divulgue une vanne de régulation d'un écoulement de gaz d'un conduit amont à un conduit aval, ladite vanne comprenant un passage apte à communiquer le conduit amont au conduit aval ; un organe mobile disposé de manière à faire varier une section d'écoulement dudit passage en se déplaçant ; un actionneur avec une chambre interne en communication avec un conduit d'échappement et un conduit d'admission apte à être relié au conduit amont, ledit actionneur étant disposé de manière à déplacer ledit organe mobile en fonction d'une pression dans ladite chambre interne ; une valve installée sur ledit conduit d'admission et une sur ledit conduit d'échappement ; un capteur de position de l'organe mobile ; et une unité de commande, connectée au capteur de position de l'organe mobile, ainsi qu'à chaque valve installée sur ledit conduit d'admission et ledit conduit d'échappement, pilotant la pression régnant dans ladite chambre interne à partir de mesures de position de l'organe mobile, et d'une valeur d'ouverture de chaque valve installée sur le conduit d'admission et le conduit d'échappement.

On connaît, dans l'état de la technique, par exemple dans US 2004/129906 A1, des vannes de régulation d'écoulement de gaz à actionnement pneumatique avec un actionneur alimenté par une dérivation du gaz dont la vanne régule l'écoulement. Toutefois ces vannes connues présentent l'inconvénient de nécessiter une pression amont stable, puisque des fluctuations dans la pression amont peuvent résulter en une instabilité dans leur fonctionnement. Une régulation avec une simple boucle de retour prenant en compte cette pression amont ne suffit pas nécessairement à résoudre ce problème, puisque la pression interne de l'actionneur peut ne pas correspondre de manière linéaire à la pression en amont. Toutefois, la mesure directe de cette pression interne dans l'actionneur n'est pas toujours possible, l'encombrement d'un capteur de pression pouvant notamment être incompatible avec une miniaturisation souhaitée de l'actionneur.

Objet et résumé de l'invention

La présente invention vise à remédier à ces inconvénients. En particulier, cette description vise à proposer une vanne de régulation d'un écoulement de gaz d'un conduit amont à un conduit aval qui permette d'utiliser la pression du fluide dans le conduit amont pour son propre actionnement, tout en assurant la stabilité du fonctionnement de la vanne même lors de fluctuations de cette pression amont, et ceci avec un encombrement restreint.

Dans au moins un mode de réalisation, ce but est atteint grâce au fait que la vanne comprend un passage apte à communiquer le conduit amont au conduit aval, un organe mobile disposé de manière à faire varier une section d'écoulement dudit passage en se déplaçant, un actionneur avec une chambre interne en communication avec un conduit d'échappement et un conduit d'admission apte à être relié au conduit amont, disposé de manière à déplacer ledit organe mobile en fonction d'une pression dans ladite chambre interne, et au moins une valve installée sur ledit conduit d'admission ou ledit conduit d'échappement, comprend aussi un capteur de pression amont, apte à être installé sur le conduit amont, un capteur de position du corps de vanne, et une unité de commande, connectée au moins auxdits capteurs de pression amont et de position du corps de vanne, ainsi qu'à l'au moins une valve installée sur au moins l'un desdits conduits d'admission et d'échappement, cette unité de commande incorporant au moins un observateur d'état apte à estimer au moins une pression régnant dans ladite chambre interne à partir de mesures de position de l'organe mobile et de pression amont, et d'une valeur d'ouverture de chaque valve installée sur le conduit d'admission ou le conduit d'échappement.

On entend par « observateur d'état », une extension d'un modèle mathématique d'un système dynamique, représenté sous forme de représentation d'état, qui permet de reconstruire l'état du système dynamique à partir de ce modèle et des mesures d'autres grandeurs lorsque cet état n'est pas directement mesurable. Grâce à son incorporation dans l'unité de commande, celle-ci peut estimer au moins la pression dans la chambre interne de l'actionneur et la prendre en compte dans la commande de chaque valve d'admission et/ou d'échappement, de manière à éviter une instabilité dans le fonctionnement de la vanne même en cas de fluctuations sensibles de la pression amont.

L'observateur d'état peut notamment être un observateur d'état par algorithme de filtrage de Kalman sans odeur, ce qui permet de répondre de manière particulièrement efficace au caractère non-linéaire du système dynamique formé par la vanne. Toutefois, d'autres types d'observateurs d'état sont également envisageables, notamment d'autres observateurs d'état non-linéaires.

Afin de mieux contrôler l'actionnement de l'organe mobile, la vanne peut comprendre une valve d'admission installée sur ledit conduit d'admission et une valve d'échappement installée sur ledit conduit d'échappement, pour mieux contrôler la pression interne dans la chambre interne et donc l'actionnement de l'organe mobile. Toutefois, il est également envisageable d'installer uniquement une valve d'admission sur le conduit d'admission, ou une valve d'échappement sur le conduit d'échappement, afin de simplifier la vanne et sa commande.

Afin de faciliter sa commande, l'au moins une valve installée sur le circuit d'admission et/ou d'échappement peut être à commande électrique, par exemple à actionnement piézoélectrique.

L'actionneur peut notamment comprendre un organe élastique pour opposer une force de rappel élastique à la pression dans la chambre interne, par exemple des parois élastiques entourant la chambre interne et formant un soufflet.

La présente description concerne également un procédé de régulation d'un écoulement de gaz d'un conduit amont à un conduit aval avec la vanne susmentionnée. Dans ce procédé, on obtient une mesure de position de l'organe mobile à travers le capteur de position, une mesure de pression dans le conduit amont à travers le capteur de pression, ainsi qu'une valeur d'ouverture de chaque valve installée sur le conduit d'admission ou le conduit d'échappement de l'actionneur, et une consigne de force de l'actionneur, on estime, à travers l'observateur d'état, au moins une pression régnant dans la chambre interne, à partir desdites mesures de position de l'organe mobile et de pression amont d'alimentation et de ladite valeur d'ouverture de chaque valve, on calcule, à partir de la pression estimée dans la chambre interne, une force estimée être exercée par l'actionneur, et ensuite une erreur de force qui est une différence entre la force estimée être exercée par l'actionneur et la consigne de force de l'actionneur, et on obtient, à partir de l'erreur de force, une commande pour chaque valve installée sur le conduit d'admission ou le conduit d'échappement de l'actionneur. Ainsi, l'observateur d'état permet d'effectuer au moins une boucle de retour de force permettant d'éviter des instabilités dans le fonctionnement du système dynamique formé par la vanne.

Ladite valeur d'ouverture de chaque valve peut résulter de la commande pour cette valve ou être mesurée par un capteur approprié.

Afin de fournir aussi un retour de position en amont du retour de force, pour ainsi renforcer la stabilité dynamique du fonctionnement de la vanne, ce procédé de régulation peut comprendre en outre l'obtention d'une consigne de position de l'organe mobile, et le calcul d'une erreur de position de l'organe mobile, la consigne de force de l'actionneur étant obtenue à partir de l'erreur de position de l'organe mobile, obtenue par exemple en fonction de ladite erreur de position par un régulateur proportionnel intégral avec anti-emballement de l'intégrale. L'erreur de position de l'organe mobile peut par exemple être calculée comme une différence entre une position estimée de l'organe mobile, estimée par exemple par l'observateur d'état, et la consigne de position. L'utilisation de la position estimée permet notamment de gommer, dans ce retour de position, le bruit de mesure du capteur de position. Toutefois, il est également envisageable d'utiliser la position de l'organe mobile, telle que mesurée à travers le capteur de position, plutôt que cette position estimée. En outre, ce retour de position peut être effectué avec une fréquence moins élevée que le retour de force.

La commande pour chaque valve peut en particulier être obtenue en fonction d'une consigne de masse de gaz dans la chambre interne qui soit calculée sur base de l'erreur de force. Plus spécifiquement, cette consigne de masse peut être calculée en fonction d'une consigne de pression dans ladite chambre interne qui est obtenue à partir de l'erreur de force à travers, par exemple, un régulateur proportionnel intégral, la consigne de masse pouvant alors être calculée par application de l'équation des gaz idéaux à ladite consigne de pression, avec un volume de la chambre interne, estimé par exemple à travers l'observateur d'état, et une température du gaz, par exemple une température mesurée du gaz dans le conduit amont.

Afin de fournir aussi un retour de masse en aval du retour de force, pour ainsi renforcer encore plus la stabilité dynamique du fonctionnement de la vanne, ladite consigne de masse peut être comparée à une masse estimée de gaz dans la chambre interne, estimée par exemple à travers l'observateur d'état, pour calculer une erreur de masse qui soit une différence entre la consigne de masse et la masse estimée.

Afin d'obtenir la commande pour chaque valve, une consigne de différence entre débit d'admission et débit d'échappement peut être obtenue à travers, par exemple, un régulateur proportionnel, à partir de l'erreur de masse, et la commande de chaque valve installée sur au moins l'un desdits conduits d'admission et d'échappement être calculée suivant l'inverse d'une fonction non-linéaire déterminant la différence entre débit d'admission et débit d'échappement à partir d'une valeur d'ouverture de chaque valve installée sur le conduit d'admission et/ou le conduit d'échappement de l'actionneur.

L'unité de commande de cette vanne peut notamment prendre la forme d'un régulateur numérique programmable. En conséquence, la présente description concerne également un support informatique comprenant un ensemble d'instructions aptes à être exécutées par un régulateur numérique programmable pour mettre en oeuvre le procédé de régulation susmentionné. Dans le présent contexte, on entend par « support informatique » tout dispositif de stockage de données pouvant être lu par un système informatique, et notamment par un processeur d'un tel régulateur électronique programmable. Un tel support informatique peut notamment être un dispositif de stockage magnétique de données, tel qu'un disque ou bande magnétique, un dispositif de stockage optique de données, tel qu'un disque optique, ou un dispositif de stockage électronique de données, tel qu'une mémoire électronique volatile ou non-volatile. La présente description concerne donc aussi cet ensemble d'instructions en tant que programme informatique et produit logiciel.

Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :

- la figure 1 illustre schématiquement une vanne à actionnement pneumatique suivant un premier mode de réalisation ;
- les figures 2A à 2D illustre schématiquement les étapes d'un algorithme de filtrage de Kalman sans odeur ;
- la figure 3 illustre schématiquement une vanne à actionnement pneumatique suivant un deuxième mode de réalisation ; et
- la figure 4 illustre schématiquement une vanne à actionnement pneumatique suivant un troisième mode de réalisation.

Description détaillée de l'invention

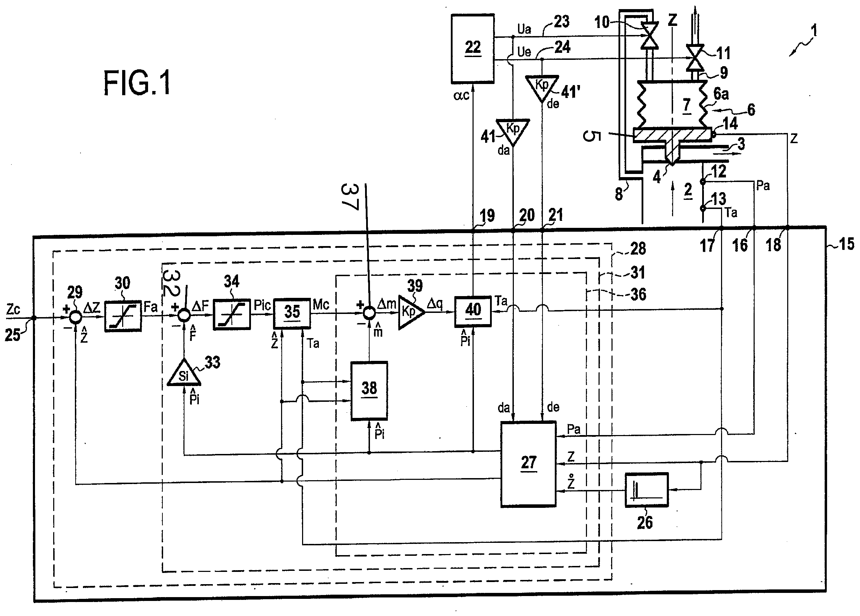

La figure 1 illustre un premier mode de réalisation d'une vanne 1 de régulation d'un écoulement de gaz d'un conduit amont 2 à un conduit aval 3. Cette vanne 1 comprend un passage 4 reliant le conduit amont 2 au conduit aval 3, et un organe mobile 5 disposé de manière à faire varier une section d'écoulement de gaz à travers le passage 4 en se déplaçant. Dans le mode de réalisation illustré, le passage 4 est formé par un orifice circulaire et l'organe mobile 5 présente une pointe conique 5a insérée dans cet orifice circulaire de manière à faire varier sa section d'écoulement proportionnellement à un déplacement axial de l'organe mobile 5 suivant un axe Z perpendiculaire à cette section d'écoulement. Toutefois, d'autres modes de réalisation sont envisageables, avec des formes différentes du passage et/ou de l'organe mobile, ainsi qu'un déplacement différent de l'organe mobile 5 pour faire varier la section d'écoulement du gaz à travers le passage 4.

La vanne 1 est à actionnement pneumatique. Elle comprend donc aussi un actionneur 6 apte à déplacer l'organe mobile en fonction d'une pression de gaz dans une chambre interne 7 de cet actionneur 6. Dans le mode de réalisation illustré, cet actionneur 6 comprend des parois élastiques 6a formant un soufflet autour de la chambre interne 7 et exerçant une force élastique de rappel de l'actionneur 6. Néanmoins, dans d'autres modes de réalisation, l'actionneur 6 peut prendre des formes alternatives, avec ou sans moyens de rappel élastique.

Un conduit d'admission 8 relie la chambre interne 7 de l'actionneur 6 au conduit amont 2. Ainsi, l'actionneur 6 peut être énergisé par la pression amont $p_a$ du gaz même dont on régule l'écoulement. Un conduit d'échappement 9, connecté également à la chambre interne 7 de l'actionneur 6, permet l'échappement de gaz de cette chambre interne 7 pour y réduire la pression interne $p_i$.

Afin de réguler l'admission et l'échappement de gaz dans et depuis la chambre interne 7, la vanne 1 comprend aussi des valves 10,11 de, respectivement, admission et échappement, installées sur, respectivement le conduit d'admission 8 et le conduit d'échappement 9. Dans le mode de réalisation illustré, ces valves 10,11 peuvent notamment être des électrovalves à actionnement piézoélectrique comprenant chacune un actionneur piézoélectrique et une bille disposée de manière à être déplacée par cet actionneur piézoélectrique pour faire varier une section d'écoulement du conduit correspondant. Toutefois, d'autres types de valves, en particulier à commande électrique, sont alternativement envisageables.

La vanne 1 comprend également un capteur 12 de pression amont, un capteur 13 de température amont, et un capteur 14 de position de l'organe mobile 5. Les capteurs 12, 13 de pression et température amont sont disposés sur le conduit amont 2 de manière à obtenir des mesures de, respectivement, une pression $p_a$ et une température $T_a$ du gaz dans le conduit amont 5, et le capteur 14 de position de l'organe mobile 5 est disposé de manière à obtenir une mesure de la position z de l'organe mobile 5.

En outre, la vanne 1 comprend une unité de commande 15 prenant ici la forme d'un régulateur numérique. Cette unité de commande 15 est connectée aux capteurs 12, 13 et 14 à travers d'entrées 16,17,18 correspondantes pour recevoir des signaux correspondant, respectivement, aux mesures de pression amont $p_a$, température amont $T_a$,

et position z de l'organe mobile 5. Elle est également connectée aux valves 10,11 à travers une sortie 19 pour leur transmettre un signal $\alpha_c$ [alpha_c] de régulation par domaine partagé et à travers deux entrées 20, 21 pour recevoir des signaux respectifs $d_a$, $d_e$ correspondant à des valeurs d'ouverture de, respectivement, la valve d'admission 10 et la valve d'échappement 11. Un circuit séparateur 22 est interposé entre la sortie 19 de l'unité de commande 15 et les valves 10, 11 et est configuré pour convertir le signal de régulation par domaine partagé $\alpha_c$ [alpha_c] en des signaux $u_a$, $u_e$ de commande de, respectivement, la valve d'admission 10 et la valve d'échappement 11, transmises à celles-ci à travers des sorties 23, 24 correspondantes du circuit séparateur 10. Dans le mode de réalisation illustré, cette conversion suit les équations suivantes :

$$u_a = \alpha_c \cdot k_{umax}$$

$$u_e = (1 - \alpha_c) \cdot k_{umax}$$

dans lequel $k_{umax}$ est un coefficient correspondant à une valeur maximale des signaux de commande $u_a$, $u_e$.

Dans le mode de réalisation illustré, les entrées 20,21 de l'unité de commande 15 sont en fait connectées aux sorties 23, 24 respectives du circuit séparateur 22 à travers de régulateurs proportionnels 41, 41' avec chacun un gain $k_p$ approprié pour convertir en signaux représentant les valeurs d'ouverture $d_a$, $d_e$ des valves 10, 11 les signaux de commande respectifs $u_a$, $u_e$. Toutefois, il est également envisageable d'incorporer des capteurs de position dans les valves 10, 11, de manière à ce que les valeurs d'ouverture $d_a$, $d_e$ soient des valeurs mesurées, plutôt que des valeurs commandées. Finalement, l'unité de commande 15 comprend une entrée 25 pour recevoir une consigne de position $z_c$ de l'organe mobile 5.

L'unité de commande 15 comprend un régulateur différentiel 26 générant, à partir du signal correspondant à la mesure de position z de l'organe mobile 5, un signal correspondant à une mesure de vitesse ż de l'organe mobile 5. L'unité de commande 15 comprend aussi un observateur d'état 27, configuré pour estimer un état du système dynamique formé par la vanne 1, cet état estimé comprenant notamment une pression interne estimée $\hat{p}_i$ du gaz dans la chambre interne 7 de l'actionneur et une position estimée $\hat{z}$ de l'organe mobile 5, à partir des mesures de position z, et de vitesse ż de l'organe mobile 5, de la mesure de pression amont $p_a$, et des valeurs d'ouverture $d_a$, $d_e$ de, respectivement, les valves d'admission 10 et d'échappement 11. Cet observateur d'état 27 est à filtre de Kalman « sans odeur » ou UKF (pour son acronyme anglais, « Unscented Kalman Filter »). Cet algorithme de filtrage, décrit dans « The Unscented Kalman Filter for Nonlinear Estimation », Proceedings of Symposium 2000 on Adaptive Systems for Signal Processing, Communication and Control (AS-SPCC), IEEE, Lake Louise, Alberta, Canada, Oct, 2000, peut être utilisé non seulement pour filtrer le bruit de signaux, mais même de manière prédictive pour prévoir l'évolution à court terme d'un système dynamique non-linéaire comme la vanne 1.

Dans un tel système dynamique, on peut assumer qu'il existe une séquence de Markov d'états latents $x_t$ évoluant dans le temps suivant une fonction de dynamique modèle *F*. Ces états latents sont observés indirectement par les capteurs indiquant des états mesurés $y_t$ à travers une fonction de mesure G. Ainsi, $x_t$ et $y_t$ peuvent être exprimés suivant les formules :

$$x_t = F\left(x_{t-1}\right) + \varepsilon$$

$$y_t = G\left(x_t\right) + v$$

Les valeurs $\varepsilon$ [epsilon] et $v$ [nu] représentent, respectivement, le bruit inhérent au système et le bruit de mesure, et suivent toutes les deux des distributions gaussiennes.

L'objet d'un algorithme de filtrage est celui d'inférer l'état du système dynamique à travers les valeurs bruitées mesurées par les capteurs. Un filtre de Kalman offre une inférence rapide et précise pour les systèmes linéaires. Il n'est toutefois pas directement applicable aux systèmes non-linéaires, dans lesquels le présent cas d'application pourrait potentiellement être classé. Parmi différentes alternatives pour adapter l'algorithme de filtrage de Kalman aux systèmes non-linéaires, on connaît notamment le filtre de Kalman « sans odeur ». Cet algorithme propage plusieurs estimations de l'état latent $x_n$ à travers les fonctions *F* et *G* et reconstruit une distribution gaussienne comme si les valeurs propagées provenaient d'un système linéaire. Les positions des estimations de l'état latent $x_n$ sont nommées « points sigma », et sont calculées à partir d'une moyenne et une variance initiales avec un schéma d'approximation appelé transformation non-parfumée.

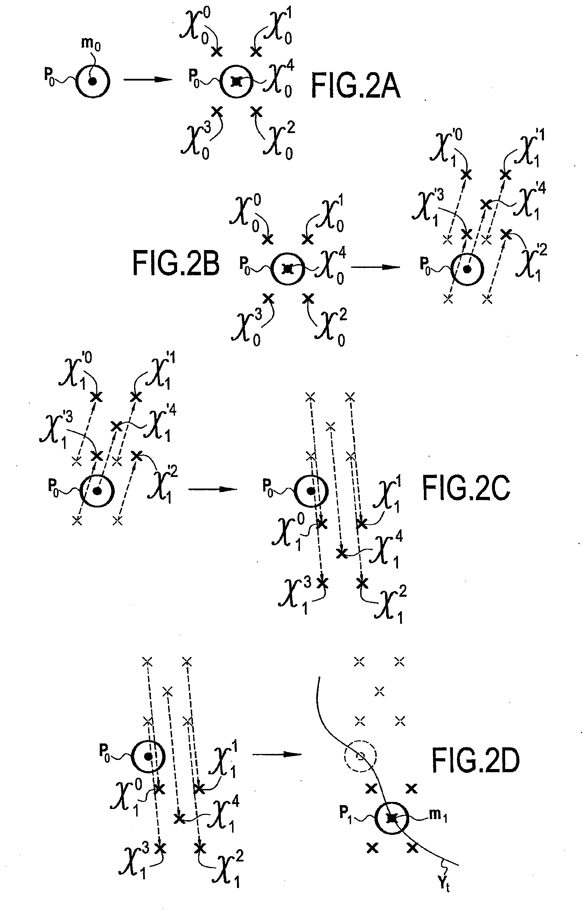

Sur la figure 2A, une première étape est illustrée dans laquelle les points sigma initiaux $X_0^0$, $X_0^1$, $X_0^2$, $X_0^3$, $X_0^4$ sont calculés, par une telle transformation non-parfumée, à partir d'une moyenne $A_0$ et une variance $V_0$ considérant pour l'état latent $x_0$ à partir d'un ensemble de mesures $y_0$ correspondant à un échantillonnage initial n=0.

Dans l'étape suivante de prédiction, illustrée sur la figure 2B, des positions estimées $X'^0_0$, $X'^1_0$, $X'^2_0$, $X'^3_0$, $X'^4_0$ des points sigma correspondant à l'échantillonnage suivant (n=1) sont prédites en appliquant, aux points sigma initiaux $X_0^0$, $X_0^1$, $X_0^2$, $X_0^3$, $X_0^4$, l'étape de prédiction de l'algorithme de filtrage de Kalman. Dans l'étape suivante de mise à jour, illustrée sur la figure 2C, les points sigma $X_1^0$, $X_1^1$, $X_1^2$, $X_1^3$, $X_1^4$ effectifs sont calculés à partir de cet échantillonnage suivant (n=1). Les différences entre les positions $X'^0_0$, $X'^1_0$, $X'^2_0$, $X'^3_0$, $X'^4_0$ prédites sur base des points sigma initiaux $X_0^0$, $X_0^1$, $X_0^2$, $X_0^3$, $X_0^4$ et celles $X_1^0$, $X_1^1$, $X_1^2$, $X_1^3$, $X_1^4$ effectivement calculées sur base du nouvel échantillonnage permettent d'obtenir de l'information sur la fonction F d'évolution de l'état latent $x_n$ dans le temps. Dans l'étape suivante, illustrée sur la figure 2D, une nouvelle moyenne $A_1$ et une nouvelle variance $V_1$ sont calculées sur la base des nouveaux points sigma $X_1^0$, $X_1^1$, $X_1^2$, $X_1^3$, $X_1^4$. Cet algorithme est récursif, et chaque étape à partir de celle de prédiction va être répétée à chaque nouvel échantillonnage.

Dans le cas présent, on adopte, pour la fonction de dynamique modèle *F,* le système d'équations suivant :

$$z_n = \frac{1}{2m_p}\left[p_{i_{n-1}} \cdot S_i - p_{a_{n-1}} \cdot S_c + K_a\left(\frac{z_{max}}{2} - z_o - z_{n-1}\right)\right]\Delta t^2 + z_{n-1}$$

$$\dot{z}_n = \frac{1}{m_p}\left[p_{i_{n-1}} \cdot S_i - p_{a_{n-1}} \cdot S_c + K_a\left(\frac{z_{max}}{2} - z_o - z_{n-1}\right)\right]\Delta t + \dot{z}_{n-1}$$

$$p_{i_n} = \frac{\gamma}{S_i \cdot z_{n-1}}\left[\frac{R \cdot T_a \cdot k_{ae}}{M_{mol} \cdot C^*}\left(d_{a_{n-1}} \cdot p_{a_{n-1}} - d_{e_{n-1}} \cdot p_{i_{n-1}}\right) - p_{i_{n-1}} \cdot S_{im} \right.$$
$$\left. \cdot \dot{z}_n\right]\Delta t + p_{i_{n-1}}$$

dans lequel $m_p$ représente la masse mobile de l'actionneur pneumatique 6 et de l'organe mobile 5, $S_i$ représente la surface d'actionnement par la pression interne $p_i$ dans la chambre 7 de l'actionneur pneumatique 6, $S_c$ la surface de la section d'écoulement dans le passage 4, $K_a$ un coefficient associé à l'actionneur 6, $z_{max}$ l'amplitude de la course maximale de l'actionneur 6, $z_o$ la longueur de la chambre interne 7 dans la position neutre de l'actionneur 6, $\gamma$ [gamma] le quotient entre la capacité thermique du gaz à pression constante et sa capacité thermique à volume constant, R la constante universelle des gaz parfaits, $M_{mol}$ la masse molaire du gaz, $k_{ae}$ un coefficient caractéristique commun aux valves d'admission 10 et d'échappement 11, qui sont ici considérées identiques, $C^*$ la vitesse caractéristique du gaz, $S_{im}$ la section transversale moyenne de la chambre interne 7 de l'actionneur 6 (laquelle, dans un actionneur à soufflet, peut être inférieure à la surface d'actionnement $S_i$), et $\Delta t$ l'intervalle temporel entre échantillonnages successifs. Ainsi, ces équations permettent de fournir des valeurs prévues de la position z et de la vitesse z de l'organe mobile 5, ainsi que de la pression interne $p_i$ pour l'échantillonnage n à partir de valeurs de la position z et la vitesse z de l'organe mobile 5, la pression interne $p_i$, la pression amont $p_a$, la température amont $T_a$ et des valeurs d'ouverture $d_a$ et $d_e$ des valves d'admission 10 et d'échappement 11 pour l'échantillonnage précédent n-1. Bien que l'on ne dispose de valeurs mesurées pour la pression interne $p_i$, l'algorithme de filtrage permettra d'obtenir une valeur estimée $\hat{p}_i$ pour cette pression interne, ainsi que des valeurs estimées pour la position et la vitesse de l'organe mobile 5 qui permettent ainsi une comparaison entre l'état prévu x'$_n$ et l'état mesuré $y_n$ lors de chaque échantillonnage n.

L'algorithme de filtrage de Kalman sans odeur applique, aux trois équations du modèle, une matrice $Q_k$ contenant des coefficients associés à la confiance accordée à chaque équation du modèle. Ainsi, par exemple, pour le mode de réalisation illustré, la matrice $Q_k$ peut contenir les valeurs suivantes :

$$Q_k = \begin{bmatrix} 1 & 0 & 0 \\ 0 & 0{,}01 & 0 \\ 0 & 0 & 0{,}1 \end{bmatrix}$$

L'algorithme applique aussi une matrice $R_k$ contenant des coefficients associés à la confiance aux valeurs mesurées. On peut remarquer que, comme la vitesse z de l'organe mobile 5 n'est mesurée qu'indirectement, par différentiation de la mesure de position z, on peut accorder plus de confiance au modèle qu'à la mesure pour cette grandeur. Ainsi, pour le mode de réalisation illustré, la matrice $R_k$ peut par exemple contenir les valeurs suivantes :

$$R_k = \begin{bmatrix} 1 & 0 \\ 0 & 0{,}5 \end{bmatrix}$$

En outre, l'algorithme de filtrage de Kalman sans odeur applique des coefficients nommé $\alpha$ [alpha], $\beta$ [beta] et $\lambda$ [lambda], lesquels, dans le mode de réalisation illustré, peuvent prendre les valeurs 0,65, 2 et 0, respectivement.

L'unité de commande 15 comprend trois boucles de retour pour comparer, à des consignes de, respectivement, position, force et masse, des valeurs estimées grâce à l'observateur d'état 27, pour calculer ainsi des erreurs correspondantes. Dans une première boucle de retour 28, dite boucle de position, un premier comparateur 29 est disposé de manière à comparer la consigne de position $z_c$, reçue à travers l'entrée 25, à la position estimée $\hat{z}$, qui a été estimée par l'observateur d'état 27, pour calculer leur différence qui constitue l'erreur de position $\Delta z$. Cette première boucle de retour 28 comprend aussi, en aval du comparateur 29, un régulateur proportionnel intégral 30 avec anti-emballement de l'intégrale pour générer, à partir de cette erreur de position $\Delta z$, une consigne de force Fc, notée Fa dans les figures.

Dans une deuxième boucle de retour 31, un deuxième comparateur 32 est disposé de manière à comparer cette consigne de force $F_c$ à une force $\hat{F}$ estimée être exercée par l'actionneur 6 sur l'organe mobile 5 pour calculer une erreur de force $\Delta F$ qui est une différence entre la consigne de force $F_c$ et la force estimée $\hat{F}$. Pour générer un signal correspondant à cette force estimée $\hat{F}$, cette deuxième boucle de retour 31 comprend aussi, entre l'observateur d'état 27 et le deuxième comparateur 32, un régulateur proportionnel 33 avec un gain correspondant à la surface d'actionnement pneumatique $S_i$. Ainsi, grâce à ce régulateur proportionnel 33, la force estimée $\hat{F}$ est calculée à partir de la pression interne estimée $\hat{p}_i$ ayant été estimée par l'observateur d'état 27. Cette deuxième boucle comprend aussi, en aval du deuxième comparateur 32, un régulateur proportionnel intégral 34 pour obtenir, à partir de l'erreur de force $\Delta F$, une commande $p_{ic}$ de pression interne dans l'actionneur 6, et un module de calcul 35 pour calculer, à partir de cette commande de pression $p_{ic}$, de la température amont $T_a$, de la section transversale moyenne $S_{im}$ de la chambre interne 7 de l'actionneur 6, de la longueur $z_0$ de la chambre interne 7 dans la position neutre de l'actionneur 6, et de la position estimée $\hat{z}$ de l'actionneur 6 par rapport à cette position neutre, une consigne de masse de gaz $m_c$ contenue dans la chambre interne, en appliquant l'équation des gaz parfaits de la manière suivante :

$$m_c = \frac{p_{ic} \cdot S_{im} \cdot (z_0 + \hat{z}) \cdot M_{mol}}{R \cdot T_a}$$

Dans une troisième boucle de retour 36, un troisième comparateur 37 est disposé de manière à comparer cette consigne de masse $m_c$ à une masse estimée m pour calculer une erreur de masse $\Delta m$ qui est une différence entre la consigne de masse $m_c$ et la masse estimée $\hat{m}$. Cette troisième boucle de retour 36 comprend aussi, entre l'observateur d'état 27 et le comparateur 37, un module de calcul 38 pour calculer cette masse estimée $\hat{m}$ à partir de la pression interne estimée $\hat{p}_i$, de la température amont $T_a$, de la section transversale moyenne $S_{im}$ de la chambre interne 7 de l'actionneur 6, de la longueur $z_0$ de la chambre interne 7 dans la position neutre de l'actionneur 6, et de la position estimée $\hat{z}$ de l'actionneur 6, en appliquant l'équation des gaz parfaits de la manière suivante :

$$\hat{m} = \frac{\hat{p}_i \cdot S_{im} \cdot (z_0 + \hat{z}) \cdot M_{mol}}{R \cdot T_a}$$

En aval du comparateur 37, cette troisième boucle de retour 36 contient aussi un régulateur proportionnel 39 pour appliquer un gain $K_p$ au signal correspondant à l'erreur de masse $\Delta m$ pour ainsi générer un signal correspondant à une consigne de différence de débit $\Delta q$ entre le conduit d'admission 8 et le conduit d'échappement 9. Finalement, en aval du régulateur proportionnel 39, cette troisième boucle de retour 36 comprend aussi un autre module de calcul 40, configuré pour calculer une valeur pour le signal de régulation par domaine partagé $\alpha_c$ [alpha_c] à partir de cette consigne de différence de débit $\Delta q$, sur base de l'équation suivante :

$$\alpha_c = \frac{\Delta q \cdot K + cd_e \cdot \hat{p}_i}{cd_a \cdot p_a + cd_e \cdot \hat{p}_i}$$

dans laquelle les valeurs $cd_a$ et $cd_e$ correspondent aux vitesses soniques du gaz dans, respectivement, le conduit d'admission 8 et le conduit d'échappement 9 et le coefficient K peut être exprimé par l'équation suivante :

$$K = \frac{C^*}{k_p \cdot k_{ae} \cdot k_{umax}}$$

En fonctionnement, donc, l'unité de commande 15 reçoit un signal de consigne $z_c$ de position de l'organe mobile, ainsi que des signaux correspondant aux mesures de pression et température amont $p_a$, $T_a$ du gaz et de position z de l'organe mobile 5, ainsi qu'aux valeurs d'ouverture $d_a$, $d_e$ des valves d'admission et échappement 10, 11. A partir des mesures de pression et température amont $p_a$, $T_a$, de la position z et vitesse z mesurées pour l'organe mobile 5, ainsi que des valeurs d'ouverture $d_a$, $d_e$ des valves d'admission et échappement 10, 11, l'observateur d'état 27 estime un état actuel de la vanne 1, comprenant au moins la pression interne estimée $\hat{p}_i$ du gaz dans la chambre interne 7 de l'actionneur et une position estimée $\hat{z}$ de l'organe mobile 5.

Dans la première boucle de retour 28, la consigne de position $z_c$ est comparée à position estimée $\hat{z}$, de manière à calculer l'erreur de position $\Delta z$, à partir de laquelle est obtenue la consigne de force $F_c$ à travers le régulateur proportionnel intégral 30 avec anti-emballement de l'intégrale.

Dans la deuxième boucle de retour 31, la consigne de force $F_c$ est comparée avec la force estimée $\hat{F}$ calculée à partir de la pression interne estimée $\hat{p}_i$ ayant été estimée par l'observateur d'état 27, de manière à calculer l'erreur de force $\Delta F$, à partir de laquelle est obtenue la consigne de masse de gaz $m_c$ à travers le régulateur proportionnel intégral 34 et le module de calcul 35.

Dans la troisième boucle de retour 36, la consigne de masse $m_c$ à la masse estimée $\hat{m}$, à partir de la pression interne estimée $\hat{p}_i$ ayant été estimée par l'observateur d'état 27, de manière à calculer l'erreur de masse $\Delta m$, à partir de laquelle est obtenue, à travers le régulateur proportionnel 39 et le module de calcul 40, la commande $\alpha_c$ [alpha_c] de régulation par domaine partagé des valves d'admission et d'échappement 10, 11.

L'unité de commande 15 prenant la forme d'un régulateur numérique, elle constitue donc un système discret dans lequel l'exécution de chacune des boucles de retour 28, 31 et 36 se répète avec une fréquence correspondante. Afin d'obtenir une meilleure réponse, la fréquence de la troisième boucle 36 peut être sensiblement plus élevée que la fréquence de la deuxième boucle 31, qui peut à son tour être plus élevée que la fréquence de la première boucle 28. Ainsi, par exemple, la troisième boucle 36 peut avoir une fréquence dix fois plus élevée que la deuxième boucle 31, et celle-ci être à son tour dix fois plus élevée que la fréquence de la première boucle 31.

Finalement, le circuit séparateur 22 génère, à partir de la commande $\alpha_c$ [alpha_c] de régulation par domaine partagé, les commandes individuelles $u_a$, $u_e$ de, respectivement, la valve d'admission 10 et la valve d'échappement 11, afin de piloter l'actionneur 6 de la vanne 1, et ceci de manière continue.

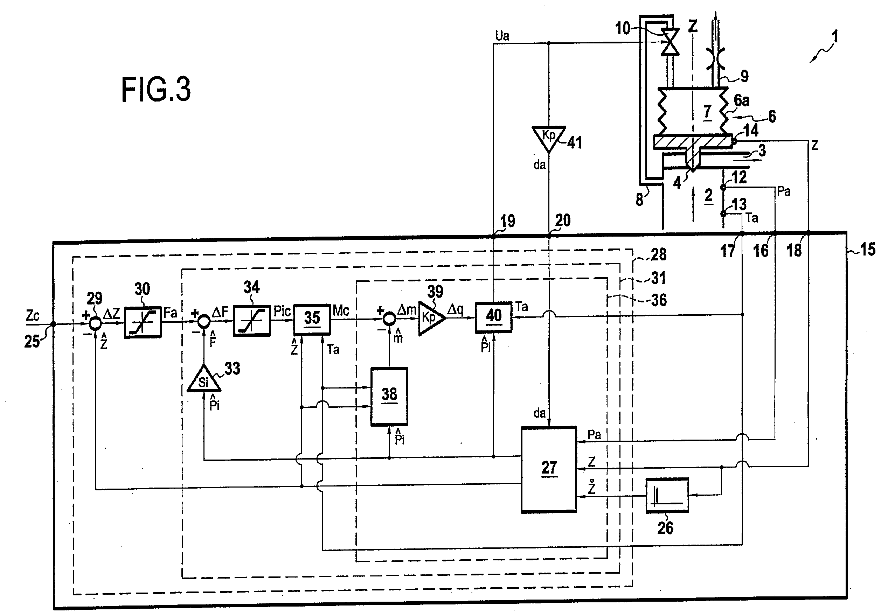

Bien que, dans ce mode de réalisation, la vanne 1 comprenne une valve d'admission 10 et une valve d'échappement 11 pour piloter cet actionneur 6, il est également envisageable de n'utiliser qu'une seule valve, soit d'admission, soit d'échappement. Ainsi, dans le mode de réalisation illustré sur la figure 3, la valve d'échappement est remplacée par une buse sonique avec une valeur d'ouverture $d_e$ fixe, et uniquement la valve d'admission 10 est pilotée par l'unité de commande 15. Un circuit séparateur n'y est donc pas nécessaire, et le module de calcul 40 est configuré pour obtenir directement le signal de commande $u_a$ à partir de la consigne de différence de débit $\Delta q$, sur base de l'équation suivante :

$$u_a = \frac{k_{ae} \cdot d_e \cdot cd_e \cdot \hat{p}_i + \Delta q \cdot C^*}{k_{ae} \cdot k_p \cdot cd_a \cdot p_a}$$

Par ailleurs, l'ouverture du conduit d'échappement 9 étant constante, il n'est pas nécessaire de renvoyer un signal indiquant une valeur d'ouverture du conduit d'échappement 9. L'observateur d'état 27 peut utiliser une valeur d'ouverture $d_e$ constante pour estimer l'état du système dynamique formé par la vanne 1.

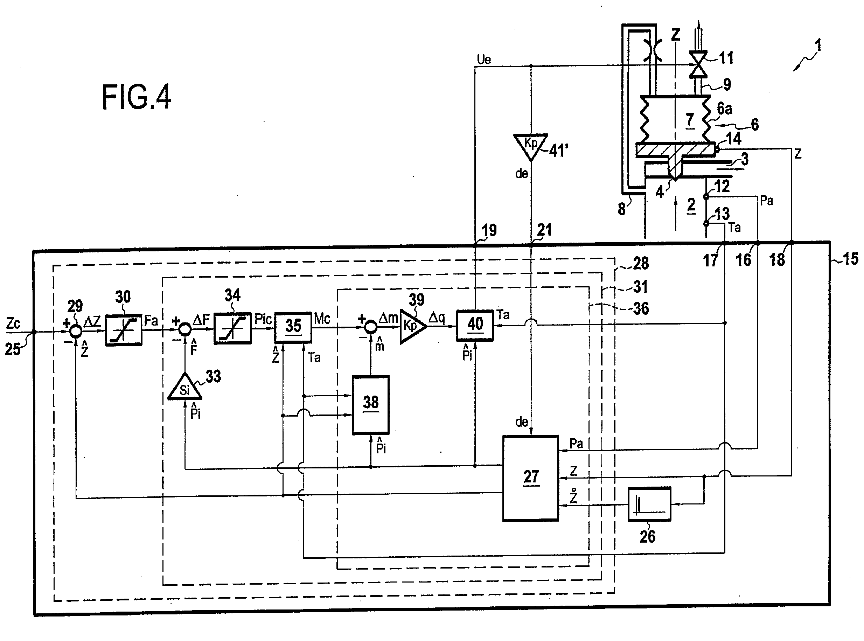

Alternativement, dans le mode de réalisation illustré sur la figure 4, la valve d'échappement est remplacée par une buse sonique avec une valeur d'ouverture $d_e$ fixe, et uniquement la valve d'admission 11 est pilotée par l'unité de commande 15. Un circuit séparateur n'y est donc pas non plus nécessaire, et le module de calcul 40 est configuré pour obtenir directement le signal de commande $u_e$ à partir de la consigne de différence de débit $\Delta q$, sur base de l'équation suivante :

$$u_e = \frac{k_{ae} \cdot d_a \cdot cd_a \cdot p_a - \Delta q \cdot C^*}{k_{ae} \cdot k_p \cdot cd_e \cdot \widehat{p_\iota}}$$

Par ailleurs, l'ouverture du conduit d'admission 8 étant constante, il n'est pas nécessaire de renvoyer un signal indiquant une valeur d'ouverture du conduit d'échappement 8. L'observateur d'état 27 peut utiliser une valeur d'ouverture $d_e$ constante pour estimer l'état du système dynamique formé par la vanne 1.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications.

**Revendications**

1. Vanne (1) de régulation d'un écoulement de gaz d'un conduit amont (2) à un conduit aval (3), ladite vanne (1) comprenant :

   un passage (4) apte à communiquer le conduit amont (2) au conduit aval (3) ;
   un organe mobile (5) disposé de manière à faire varier une section d'écoulement dudit passage (4) en se déplaçant ;
   un actionneur (6) avec une chambre interne (7) en communication avec un conduit d'échappement (9) et un conduit d'admission (8) apte à être relié au conduit amont (2), ledit actionneur (6) étant disposé de manière à déplacer ledit organe mobile (5) en fonction d'une pression dans ladite chambre interne (7) ;
   au moins une valve (10,11) installée sur ledit conduit d'admission (8) ou ledit conduit d'échappement (9) ;
   un capteur (12) de pression amont, apte à être installé sur le conduit amont (2) ;
   un capteur (14) de position de l'organe mobile (5) ; et
   une unité de commande (15), connectée au moins auxdits capteurs (12,14) de pression amont et de position de l'organe mobile (5), ainsi qu'à chaque valve (10,11) installée sur ledit conduit d'admission (8) ou ledit conduit d'échappement (9), incorporant au moins un observateur d'état (27) apte à estimer au moins une pression régnant dans ladite chambre interne (7) à partir de mesures de position de l'organe mobile (5) et de pression amont, et d'une valeur d'ouverture de chaque valve (10,11) installée sur le conduit d'admission (8) ou le conduit d'échappement (9).

2. Vanne (1) suivant la revendication 1, dans laquelle ledit observateur d'état (27) est un observateur d'état par algorithme de filtrage de Kalman sans odeur.

3. Vanne (1) suivant l'une quelconque des revendications 1 ou 2, comprenant une valve d'admission (10) installée sur ledit conduit d'admission (8) et une valve d'échappement (11) installée sur ledit conduit d'échappement (9).

4. Vanne (1) suivant l'une quelconque des revendications précédentes, dans laquelle chaque valve (10,11) installée sur le circuit d'admission (8) ou d'échappement (9) est à commande électrique, par exemple à actionnement piézoélectrique.

5. Vanne (1) suivant l'une quelconque des revendications précédentes, dans laquelle ledit actionneur (6) comprend un organe élastique pour opposer une force de rappel élastique à la pression régnant dans la chambre interne (7), par exemple des parois élastiques (6a) entourant la chambre interne (7) et formant un soufflet.

6. Procédé de régulation d'un écoulement de gaz d'un conduit amont (2) à un conduit aval avec une vanne (1) suivant l'une quelconque des revendications précédentes, comprenant au moins les étapes suivantes :

   l'obtention d'une mesure de position de l'organe mobile à travers le capteur de position (14) ;
   l'obtention d'une mesure de pression dans le conduit amont à travers le capteur de pression (12) ;
   l'obtention d'une valeur d'ouverture de chaque valve (10,11) installée sur le conduit d'admission (8) ou le conduit d'échappement (9) de l'actionneur (6) ;

l'obtention d'une consigne de force de l'actionneur (6) ;

l'estimation, à travers l'observateur d'état (27), d'au moins une pression régnant dans la chambre interne (7), à partir desdites mesures de position de l'organe mobile (5) et de pression, et de ladite valeur d'ouverture de chaque valve (10,11) ;

le calcul, à partir de la pression estimée régner dans la chambre interne (7), d'une force estimée être exercée par l'actionneur (6) ;

le calcul d'une erreur de force qui est une différence entre la force estimée être exercée par l'actionneur (6) et la consigne de force de l'actionneur (6) ; et

l'obtention, à partir de l'erreur de force, d'une commande pour chaque valve (10,11) installée sur le conduit d'admission (8) ou le conduit d'échappement (9) de l'actionneur (6).

7. Procédé de régulation suivant la revendication 6, comprenant en outre les étapes suivantes :

l'obtention d'une consigne de position de l'organe mobile (5) ; et

le calcul d'une erreur de position de l'organe mobile (5) ; et dans lequel la consigne de force de l'actionneur (6) est obtenue à partir de l'erreur de position de l'organe mobile (5).

8. Procédé de régulation suivant la revendication 7, dans lequel ladite consigne de force est obtenue en fonction de ladite erreur de position par un régulateur proportionnel intégral (30) avec anti-emballement de l'intégrale.

9. Procédé de régulation suivant l'une quelconque des revendications 7 ou 8, dans lequel l'erreur de position de l'organe mobile (5) est une différence entre une position estimée de l'organe mobile (5), estimée par exemple par l'observateur d'état (27), et la consigne de position.

10. Procédé de régulation suivant l'une quelconque des revendications 6 à 9, dans lequel la commande pour chaque valve (10,11) est obtenue en fonction d'une consigne de masse de gaz dans la chambre interne (7) qui est calculée sur base de l'erreur de force.

11. Procédé de régulation suivant la revendication 10, dans lequel la consigne de masse est calculée en fonction d'une consigne de pression dans ladite chambre interne (7) qui est obtenue, à partir de l'erreur de force, à travers, par exemple, un régulateur proportionnel intégral (34).

12. Procédé de régulation suivant la revendication 11, dans lequel la consigne de masse est calculée par application de l'équation des gaz idéaux à ladite consigne de pression, avec un volume de la chambre interne (7), estimé par exemple à travers l'observateur d'état (27), et une température du gaz, par exemple une température mesurée du gaz dans le conduit amont (2).

13. Procédé de régulation suivant l'une quelconque des revendications 10 à 12, dans lequel ladite consigne de masse est comparée à une masse estimée de gaz dans la chambre interne (7), estimée par exemple à travers l'observateur d'état (27), pour calculer une erreur de masse qui est une différence entre la consigne de masse et la masse estimée.

14. Procédé de régulation suivant la revendication 13, dans lequel une consigne de différence entre débit d'admission et débit d'échappement est obtenue à travers, par exemple, un régulateur proportionnel (39), à partir de l'erreur de masse, et la commande de chaque valve (10,11) installée sur le conduit d'admission (8) ou le conduit d'échappement (9) est calculée suivant l'inverse d'une fonction non-linéaire déterminant la différence entre débit d'admission et débit d'échappement à partir d'une valeur d'ouverture de chaque valve (10,11) installée sur le conduit d'admission (8) ou le conduit d'échappement (9) de l'actionneur (6).

**Patentansprüche**

1. Ventil (1) zum Regeln eines Gasstroms von einer stromaufwärts gelegenen Leitung (2) zu einer stromabwärts gelegenen Leitung (3), wobei das Ventil (1) umfasst:

einen Durchgang (4), der in der Lage ist, die stromaufwärts gelegene Leitung (2) mit der stromabwärts gelegenen Leitung (3) zu verbinden,

ein bewegliches Element (5), das so angeordnet ist, dass es einen Strömungsquerschnitt des Durchgangs (4) variieren lässt, wenn es bewegt wird,

ein Stellglied (6) mit einer Innenkammer (7) in Verbindung mit einer Auslassleitung (9) und einer Einlassleitung (8) stehend, die mit der stromaufwärts gelegenen Leitung (2) verbindbar ist, wobei das Stellglied (6) so angeordnet ist, dass es das bewegliche Element (5) in Abhängigkeit von einem Druck in der Innenkammer (7) bewegt, mindestens ein Ventil (10, 11), das an der Einlassleitung (8) oder der Auslassleitung (9) installiert ist, einen Sensor (12) für den stromaufwärtigen Druck, der geeignet ist, an der stromaufwärts gelegenen Leitung (2) installiert zu werden, einen Sensor (14) der Position des beweglichen Elements (5), und eine Steuerungseinheit (15), die mindestens mit den Sensoren (12, 14) für den stromaufwärtigen Druck und die Position des beweglichen Elements (5) sowie mit jedem Ventil (10, 11) verbunden ist, das an der Einlassleitung (8) oder der Auslassleitung (9) installiert ist, mit mindestens einem Zustandsbeobachter (27), der in der Lage ist, mindestens einen in der Innenkammer (7) herrschenden Druck aus Messungen der Position des beweglichen Elements (5) und des stromaufwärtigen Drucks sowie einem Öffnungswert jedes Ventils (10, 11), das an der Einlassleitung (8) oder der Auslassleitung (9) installiert ist, zu schätzen.

2. Ventil (1) nach Anspruch 1, wobei der Zustandsbeobachter (27) ein mit einem Unscented-Kalman-Filter-Algorithmus arbeitender Zustandsbeobachter ist.

3. Ventil (1) nach einem der Ansprüche 1 oder 2, umfassend ein Einlassventil (10), das an der Einlassleitung (8) installiert ist, und ein Auslassventil (11), das an der Auslassleitung (9) installiert ist.

4. Ventil (1) nach einem der vorstehenden Ansprüche, wobei jedes Ventil (10, 11), das am Einlass- (8) oder Auslasskreis (9) installiert ist, elektrisch gesteuert wird, zum Beispiel durch piezoelektrische Ansteuerung.

5. Ventil (1) nach einem der vorstehenden Ansprüche, wobei das Stellglied (6) ein elastisches Element umfasst, um dem in der Innenkammer (7) herrschenden Druck eine elastische Rückstellkraft entgegenzusetzen, beispielsweise elastische Wände (6a), die die Innenkammer (7) umgeben und einen Balg bilden.

6. Verfahren zum Regeln eines Gasstroms von einer stromaufwärts gelegenen Leitung (2) zu einer stromabwärts gelegenen Leitung mit einem Ventil (1) nach einem der vorstehenden Ansprüche, umfassend mindestens die folgenden Schritte:

Erhalten einer Positionsmessung des beweglichen Elements durch den Positionssensor (14), Erhalten einer Druckmessung in der stromaufwärts gelegenen Leitung durch den Drucksensor (12), Erhalten eines Öffnungswerts für jedes Ventil (10, 11), das an der Einlassleitung (8) oder der Auslassleitung (9) des Stellglieds (6) installiert ist, Erhalten eines Kraftsollwerts von dem Stellglied (6), Schätzen mindestens eines in der Innenkammer (7) herrschenden Drucks durch den Zustandsbeobachter (27) aus den Messungen der Position des beweglichen Elements (5) und des Drucks und des Öffnungswerts jedes Ventils (10, 11), Berechnen einer geschätzten Kraft, die von dem Stellglied (6) auszuüben ist, aus dem in der Innenkammer (7) herrschenden geschätzten Druck, Berechnen eines Kraftfehlers, der eine Differenz zwischen der geschätzten Kraft, die von dem Stellglied (6) auszuüben ist, und dem Kraftsollwert des Stellglieds (6) darstellt, und Erhalten einer Steuerung für jedes Ventil (10, 11), das an der Einlassleitung (8) oder der Auslassleitung (9) des Stellglieds (6) installiert ist, aus dem Kraftfehler.

7. Regelverfahren nach Anspruch 6, ferner umfassend die folgenden Schritte:

Erhalten eines Positionssollwerts von dem beweglichen Element (5), und Berechnen eines Positionsfehlers des beweglichen Elements (5), und wobei der Kraftsollwert des Stellglieds (6) aus dem Positionsfehler des beweglichen Elements (5) erhalten wird.

8. Regelverfahren nach Anspruch 7, wobei der Kraftsollwert als Funktion des Positionsfehlers durch einen Proportional-Integral-Regler (30) mit Überdrehzahlsicherung des Integrals erlangt wird.

9. Regelverfahren nach einem der Ansprüche 7 oder 8, wobei der Positionsfehler des beweglichen Elements (5) eine Differenz zwischen einer geschätzten Position des beweglichen Elements (5), die beispielsweise von dem Zustandsbeobachter (27) geschätzt wird, und dem Positionssollwert darstellt.

10. Regelverfahren nach einem der Ansprüche 6 bis 9, wobei die Steuerung für jedes Ventil (10, 11) in Abhängigkeit von einem Gasmassensollwert in der Innenkammer (7) erhalten wird, der basierend auf dem Kraftfehler berechnet wird.

11. Regelverfahren nach Anspruch 10, wobei der Massensollwert als Funktion eines Drucksollwerts in der Innenkammer (7) berechnet wird, der aus dem Kraftfehler, beispielsweise durch einen Proportional-Integral-Regler (34), erhalten wird.

12. Regelverfahren nach Anspruch 11, wobei der Massensollwert durch Anwenden der Gleichung idealer Gase auf den Drucksollwert berechnet wird, mit einem Volumen der Innenkammer (7), das beispielsweise durch den Zustandsbeobachter (27) geschätzt wird, und einer Gastemperatur, beispielsweise einer gemessenen Gastemperatur in der stromaufwärts gelegenen Leitung (2).

13. Regelverfahren nach einem der Ansprüche 10 bis 12, wobei der Massensollwert mit einer geschätzten Gasmasse in der Innenkammer (7) verglichen wird, die beispielsweise durch den Zustandsbeobachter (27) geschätzt wird, um einen Massenfehler zu berechnen, der eine Differenz zwischen dem Massensollwert und der geschätzten Masse darstellt.

14. Regelverfahren nach Anspruch 13, wobei ein Differenzsollwert zwischen dem Einlass- und dem Auslassdurchfluss beispielsweise durch einen Proportionalregler (39) aus dem Massenfehler erhalten wird, und die Steuerung jedes Ventils (10, 11), das an der Einlassleitung (8) oder der Auslassleitung (9) installiert ist, als Kehrwert einer nichtlinearen Funktion berechnet wird, die die Differenz zwischen Einlass- und Auslassdurchfluss aus einem Öffnungswert jedes Ventils (10, 11) bestimmt, das an der Einlassleitung (8) oder der Auslassleitung (9) des Stellglieds (6) installiert ist.

**Claims**

1. A regulator valve (1) for regulating a flow of gas from an upstream duct (2) to a downstream duct (3), said regulator valve (1) comprising:

   a passage (4) suitable for bringing the upstream duct (2) into communication with the downstream duct (3);
   a movable member (5) arranged so as to vary a flow section of said passage (4) by moving;
   an actuator (6) with an internal chamber (7) in communication with an exhaust duct (9) and an admission duct (8) suitable for being connected to the upstream duct (2), said actuator (6) being arranged in such a manner as to move said movable member (5) according to a pressure in said internal chamber (7);
   at least one valve (10, 11) installed in said admission duct (8) or in said exhaust duct (9);
   an upstream pressure sensor (12) suitable for being installed in the upstream duct (2);
   a sensor (14) for sensing the position of the movable member (5); and
   a control unit (15) connected to at least said upstream pressure sensor (12) and said sensor (14) for sensing the position of the movable member (5), and to each valve (10, 11) installed in said admission duct (8) or said exhaust duct (9), the control unit incorporating at least one state observer (27) suitable for estimating at least one pressure that exists in said internal chamber (7) from measurements of the position of the movable member (5) and of the upstream pressure, and from an opening value for each valve (10, 11) installed in the admission duct (8) or the exhaust duct (9).

2. A valve (1) according to claim 1, wherein said state observer (27) is a state observer using an unscented Kalman filter algorithm.

3. A valve (1) according to claim 1 or claim 2, including an admission valve (10) installed in said admission duct (8) and an exhaust valve (11) installed in said exhaust duct (9).

4. A valve (1) according to any preceding claim, wherein each valve (10, 11) installed in the admission circuit (8) or the exhaust circuit (9) is electrically controlled, e.g. being piezoelectrically actuated.

5. A valve (1) according to any preceding claim, wherein said actuator (6) includes a resilient member for opposing a resilient return force against the pressure that exists in the internal chamber (7), e.g. resilient walls (6a) surrounding the internal chamber (7) and forming a bellows.

6. A method of regulating a flow of gas from an upstream duct (2) to a downstream duct by means of a regulator valve (1) according to any preceding claim, the method comprising at least the following steps:

   obtaining a measurement of the position of the movable member by using the position sensor (14);
   obtaining a measurement of the pressure in the upstream duct by using the pressure sensor (12);
   obtaining an opening value for each valve (10, 11) installed in the admission duct (8) or the exhaust duct (9) of the actuator (6);
   obtaining a force setpoint for the actuator (6);
   using the state observer (27) to estimate at least one pressure existing in the internal chamber (7) from said measured position of the movable member (5) and said measured pressure, and from said opening value of each valve (10, 11) ;
   using the pressure estimated to exist in the internal chamber (7) to calculate a force estimated to be exerted by the actuator (6);
   calculating a force error, which is the difference between the force estimated to be exerted by the actuator (6) and the force setpoint for the actuator (6); and
   using the force error to obtain a command for each valve (10, 11) installed in the admission duct (8) or the exhaust duct (9) of the actuator (6).

7. A regulation method according to claim 6, further comprising the following steps:

   obtaining a position setpoint for the movable member (5); and
   calculating a position error of the movable member (5); and wherein the force setpoint for the actuator (6) is obtained from the position error of the movable member (5) .

8. A regulation method according to claim 7, wherein said force setpoint is obtained as a function of said position error by a proportional integral regulator (30) with means for preventing runaway of the integral.

9. A regulation method according to claim 7 or claim 8, wherein the position error of the movable member (5) is the difference between an estimated position of the movable member (5), e.g. as estimated by the state observer (27), and the position setpoint.

10. A regulation method according to any one of claims 6 to 9, wherein the command for each valve (10, 11) is obtained as a function of a mass setpoint for gas in the internal chamber (7), which is calculated on the basis of the force error.

11. A regulation method according to claim 10, wherein the mass setpoint is calculated as a function of a setpoint for pressure in said internal chamber (7), which setpoint is obtained from the force error, e.g. by means of a proportional integral regulator (34).

12. A regulation method according to claim 11, wherein the mass setpoint is calculated by applying the ideal gas equation to said pressure setpoint, with a volume of the internal chamber (7), e.g. as estimated by the state observer (27), and a gas temperature, e.g. a measured temperature of the gas in the upstream duct (2).

13. A regulation method according to any one of claims 10 to 12, wherein said mass setpoint is compared with an estimated mass for gas in the internal chamber (7),
   e.g. as estimated by the state observer (27), in order to calculate a mass error, which is a difference between the mass setpoint and the estimated mass.

14. A regulation method according to claim 13, wherein a setpoint for the difference between the admission flow rate and the exhaust flow rate is obtained, via for example a proportional regulator (39), on the basis of the mass error, and the command for each valve (10, 11) installed in the admission duct (8) or the exhaust duct (9) is calculated using the inverse of a non-linear function determining the difference between the admission flow rate and the exhaust flow rate on the basis of an opening value for each valve (10, 11) installed in the admission duct (8) or the exhaust duct (9) of the actuator (6).

FIG.1

FIG.2A

FIG.2B

FIG.2C

FIG.2D

FIG.3

FIG.4

**RÉFÉRENCES CITÉES DANS LA DESCRIPTION**

**Documents brevets cités dans la description**

- US 20020117214 A1
- US 20100051110 A1
- US 2004129906 A1